# EUROPÄISCHE PATENTSCHRIFT

(11) **EP 1 792 679 B1**
(45) Veröffentlichungstag und Bekanntmachung des Hinweises auf die Patenterteilung: **05.08.2009**
(21) Anmeldenummer: 06025058.6
(22) Anmeldetag: 04.12.2006
(51) Int. Cl.: B23B 31/30

(54) **Hydraulische Spanneinrichtung**
Hydraulic clamping device
Dispositif de serrage hydraulique

(30) Priorität: 05.12.2005 DE 102005058156
(43) Veröffentlichungstag der Anmeldung: 06.06.2007
(73) Patentinhaber: Schunk GmbH & Co. KG Spann- und Greiftechnik, 74348 Lauffen (DE)
(72) Erfinder: Peter, Ralph, 74348 Lauffen (DE)
(74) Vertreter: Paul, Dieter-Alfred

(56) Entgegenhaltungen:
- EP-A- 0 991 872
- WO-A-98/46896

## Beschreibung

Die Erfindung betrifft eine hydraulische Spanneinrichtung mit zwei koaxial angeordneten Dehnbüchsen, die endseitig miteinander verbunden sind und zwischen sich eine mit Hydraulikmittel gefüllte Druckkammer bilden, wobei in die Druckkammer ein Hydraulikmittelzuführkanal mündet, der an seiner von der Druckkammer fernen Seite durch eine Spannschraube verschlossen ist, wobei die Spannschraube mit einem im Hydraulikmittelzuführkanal verschiebbar angeordneten Kolben wirkverbunden ist, so daß der Kolben durch Drehung der Spannschraube unter Erhöhung des Drucks in der Druckkammer nach innen verschiebbar ist.

Hydraulische Spanneinrichtungen dieser Art sind beispielsweise aus der WO 98/46896 vorbekannt und werden insbesondere als Werkzeughalter an Bearbeitungsmaschinen eingesetzt. Dabei bildet die äußere Dehnbüchse einen Befestigungsschaft, der in eine maschinenseitige Arbeitsspindel eingesetzt werden kann, und definiert die innere Dehnbüchse eine Aufnahme für einen zu spannenden Werkzeugschaft. Der Ringraum zwischen den beiden Dehnbüchsen ist als Druckkammer ausgebildet. Wenn der Druck in dieser erhöht wird, indem die in dem Hydraulikmittelzuführkanal des Grundkörpers eingesetzte Spannschraube nach innen in Richtung der Druckkammer verstellt wird, werden die Dehnbüchsen gleichzeitig elastisch verformt, um mehr oder weniger synchron den Werkzeughalter durch die radial nach außen gerichtete Verformung der äußeren Dehnbüchse in einer Arbeitsspindel zu fixieren und einen in die Aufnahme eingesetzten Werkzeugschaft durch die radial nach innen gerichtete Verformung der inneren Dehnbüchse in dem Werkzeughalter zu spannen.

Es wird als nachteilig angesehen, daß diese Art der Montage aufwendig ist und außerdem exakte Wiederholeinspannungen nach einem Werkzeugwechsel kaum möglich sind, weil die über das Hydraulikmittel ausgeübten Kräfte sich gleichmäßig und gleichzeitig auf beide Dehnbüchsen verteilen.

Um dieser Problematik zu begegnen, wird in der EP 0 991 872 B1 vorgeschlagen, einen den Grundkörper durchgreifenden Druckraum vorzusehen, dessen beide gegenüberliegenden axialen Enden durch Spannschrauben verschlossen sind, die nacheinander einzeln betätigt werden, um durch die Betätigung der ersten Spannschraube zunächst einen definierten Zwischendruck und durch anschließende Betätigung der zweiten Spannschraube einen definierten Enddruck zu erzeugen. Bei entsprechender Ausgestaltung der Dehnbüchsen ist es auf diese Weise möglich, nacheinander zunächst die Innenspannung und anschließend die Außenspannung vorzunehmen oder in umgekehrter Weise zunächst die Außenspannung und dann die Innenspannung. Als nachteilig an der Lösung wird jedoch angesehen, daß die beiden Spannschrauben von unterschiedlichen Seiten der Spanneinrichtung betätigt werden müssen und des weiteren auch Fehlspannungen auftreten, wenn die beiden Spannschrauben in der falschen Reihenfolge betätigt werden.

Vor diesem Hintergrund liegt der Erfindung die Aufgabe zugrunde, eine Spanneinrichtung der eingangs genannten Art so auszugestalten, daß sie kompakt in der Ausgestaltung und einfach und sicher zu bedienen ist.

Diese Aufgabe ist erfindungsgemäß dadurch gelöst, daß die Spannschraube eine zentrale, mit einem Innengewinde versehene Durchgangsbohrung aufweist, in welche eine Voreinstellschraube eingeschraubt ist, und daß die voreinstellschraube gegenüber der Spannschraube axial nach innen in eine Voreinstellposition bewegt werden kann, wobei sie sich aus der Spannschraube heraus gegen den Kolben bewegt und diesen unter Erhöhung des Drucks in der Druckkammer nach innen drückt.

Bei der Spanneinrichtung gemäß der Erfindung erfolgt die Betätigung des Dehnspannmechanismue in grundsätzlich bekannter Weise in zwei Schritten.

Dabei wird in einem ersten Schritt die Voreinstellschraube relativ zu der Spannschraube, welche sich in ihrer äußeren Ausgangsposition befindet, in eine definierte Voreinstellposition, welche beispielsweise durch einen Anschlag festgelegt sein kann, verstellt. Durch diese Verstellung der Voreinstellschraube wird auch der Kolben verschoben und in eine definierte Zwischenposition gebracht, welche einem vorgegebenen Zwischendruck in der Druckkammer entspricht.

Anschließend wird in einem zweiten Schritt die Spannschraube zusammen mit der Voreinstellschraube aus der äußeren Ausgangsposition in ihre Betätigungsposition, welche ebenfalls durch einen entsprechenden Anschlag definiert sein kann, verstellt. Dabei wird auch der Kolben in seiner Endposition bewegt, welche einem definierten Enddruck in der Druckkammer entspricht.

Mit anderen Worten sind bei der erfindungsgemäßen Spannvorrichtung mit der Voreinstellschraube und der Spannschraube zwei separate Betätigungselemente vorgesehen, die definiert gegen einen Anschlag bewegt werden können und dabei den Fluiddruck in der Druckkammer auf definierte Niveaus erhöhen. Konkret lassen sich durch die erfindungsgemäße Ausgestaltung zwei definierte Drücke in der Druckkammer einstellen, nämlich ein niedrigerer Zwischendruck durch die Betätigung der Voreinstellschraube und ein höherer Enddruck durch anschließende Betätigung der Spannschraube. Je nach dem, wie die den Büchsen in ihren Elastizitätsverhalten ausgelegt sind, beispielsweise durch geeignete Wahl der Wanddicken und verwendeten Materialien, würde eine definierte Verformung der beiden Dehnbüchsen in den beiden Spannpositionen erreicht.

Damit ist es bei entsprechender Dimensionierung und Ausgestaltung der Dehnbüchsen beispielsweise möglich, nacheinander zunächst bei dem niedrigeren Zwischendruck mittels der inneren Dehnbüchse ein Bauteil zu spannen und anschließend die Spanneinrichtung bei dem höheren Enddruck über die äußere Dehnbüchse in einer Werkzeughalterung zu spannen. Ebenso ist es in umgekehrter Weise möglich, die Dehnbüchsen so zu dimensionieren bzw. auszugestalten, daß bei dem niedrigeren Zwischendruck zunächst die äußere Spannbüchse aktiviert wird, um beispielsweise ein Werkzeug auf ihr zu fixieren, und erst anschließend bei höheren Drücken die innere Dehnbüchse zu aktivieren, um die Spanneinrichtung auf einer Welle anzubringen.

Diese Ausgestaltung ermöglicht es insbesondere, ein Werkzeug über die spannvorrichtung definiert zu spannen, beispielsweise in einer Einrichtstation, um dann anschließend an einer Bearbeitungsmaschine angebracht zu werden. Auf diese Weise kann das Werkzeug in gespanntem Zustand nachbearbeitet, beispielsweise geschliffen und auch eingerichtet werden, ohne daß es hierbei von der Werkzeugaufnahme in Form der Spannvorrichtung entfernt werden muß.

Dadurch, daß bei der erfindungsgemäßen Spanneinrichtung die Spannschraube und die Voreinstellschraube koaxial ineinander greifende Bauteile sind, ist die Anordnung sehr kompakt. Des weiteren besteht auch die Möglichkeit, bereits bestehende Spanneinrichtungen mit der erfindungsgemäßen Lösung nachzurüsten. Hierzu ist es lediglich erforderlich, die konventionell vorgesehene Spannschraube durch eine Spannschraube mit integrierter Voreinstellschraube zu ersetzen und einen Anschlag vorzusehen, welcher die äußere Ausgangsposition der Spannschraube definiert. Des weiteren ist die erfindungsgemäße Spanneinrichtung einfach zu bedienen, da die Spannschraube und die Voreinstellschraube von der gleichen Seite her bedient werden. Da die Eingriffsöffnung beispielsweise für einen Innensechskantschlüssel der innenliegenden Voreinstellschraube zwangsläufig kleiner sein muß als die entsprechende Einstecköffnung für die Spannschraube, können auch Fehlbetätigungen ausgeschlossen werden, da mit unterschiedlich großen Betätigungswerkzeugen gearbeitet werden muß.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine spannvorrichtung gemäß der vorliegenden Erfindung in teilweise geschnittener Seitenansicht,
- Figur 2: die Spanneinrichtung im Schnitt entlang der Linie A-A von Figur 1 in ihrer Ausgangsstellung,
- Figur 3: die Spanneinrichtung im Schnitt entlang der Linie A-A von Figur 1 in ihrer Voreinstellposition und
- Figur 4: die Spanneinrichtung im Schnitt entlang der Linie A-A aus Figur 1 in der Endspannposition.

In der Zeichnung ist eine hydraulische Spanneinrichtung 1 gemäß der vorliegenden Erfindung dargestellt, mit der es möglich ist, gleichzeitig eine Innenspannung und eine Außen- oder Dornspannung vorzunehmen. Die Spanneinrichtung 1 besitzt einen ringförmigen Grundkörper 2, an dessen innerem Randbereich zwei dünnwandige Dehnbüchsen 3, 4 koaxial zueinander angeordnet sind. Dabei bildet die äußere Dehnbüchse 4 einen Fortsatz des Grundkörpers 2 und ist die innere Dehnbüchse 3 in den Grundkörper 2 und die äußere Dehnbüchse 4 eingeschoben und mit ihnen endseitig unter Bildung einer sich axial erstreckenden, ringförmigen Druckkammer 5 verbunden. Die Druckkammer 5 steht über einen Hydraulikmittelzuführkanal 6 mit einem im Grundkörper 2 ausgebildeten Zylinderraum 14 in Verbindung, der endseitig durch ein Stellglied verschlossen ist. Das Stellglied wird in an sich bekannter Weise von einem in dem Zylinderraum 14 verschiebbar angeordneten Kolben 8, einem Druckstück 8a und einer in den Grundkörper 2 eingeschraubten Spannschraube 7 mit einem Innensechskantkopf 7a, in welche ein Drehwerkzeug in der Form eines Innensechskantschlüssels eingesetzt werden kann, gebildet. Der Druckraum 5, der Hydraulikmittelzuführkanal 6 und der Zylinderraum 14 sind vollständig mit einem Hydraulikmittel gefüllt.

Bei der Spanneinrichtung 1 bildet die äußere Dehnbüchse 4 einen Spanndorn, der außenseitig mit einer zylindrischen Spannfläche versehen ist, und bildet die innere Dehnbüchse 3 eine zentrale Aufnahme, in welcher ein zu spannendes Bauteil wie beispielsweise der Schaft eines Werkzeugs eingespannt werden kann. Entsprechend ist auch die Innenfläche der Dehnbüchse 3 als zylindrische, fein erarbeitete Spannfläche ausgebildet.

Wenn die Spannschraube 7 in den Grundkörper 2 eingeschraubt wird, wird auch der Kolben 8 über das Druckstück 8a in den Zylinderraum 14 hineingedrückt, wodurch ein hoher Druck auf die im Zylinderraum eingeschlossene Flüssigkeit ausgeübt wird, der über den Hydraulikmittelzuführkanal 6 in den Druckraum 5 übertragen wird. Dieser hydraulische Druck bewirkt eine elastische Auswölbung der inneren Dehnbüchse 3 nach innen hin sowie gleichzeitig eine radiale Auswölbung der äußeren Dehnbüchse 4 nach außen hin. Somit können durch einen einzigen Betätigungsvorgang zwei gesonderte Bauteile, nämlich einmal ein in die Aufnahme der inneren Dehnbüchse 3 eingeschobenes Bauteil und zum anderen ein hohlzylindrisches Bauteil, welches auf die äußere Dehnbüchse 4 aufgeschoben ist, gleichzeitig gespannt werden, wobei die für das Dehnspannprinzip charakteristische genaue Zentrierung beider Bauteile erreicht wird.

Erfindungsgemäß ist die Spannschraube 7 als hohlzylindrisches Bauteil ausgebildet, wobei in die zentrale Durchgangsbohrung 9 der Spannschraube 7 eine Voreinstellschraube 10 eingeschraubt ist. Hierbei ist zu beachten, daß das Gewinde der Spannschraube 7 und das Gewinde der Voreinstellschraube 10 gegenläufig ausgebildet sind, d.h. ein Gewinde ein rechtsläufiges Gewinde und das andere Gewinde ein linksläufiges Gewinde ist. Die Voreinstellschraube 10 besitzt wie die Spannschraube 7 einen Innensechskantkopf 10a, in welchen ein Drehwerkzeug in der Form eines Innensechskantschlüssels eingesetzt werden kann. In der Zeichnung nicht gut erkennbar ist, daß die Voreinstellschraube 10 und die Spannschraube 7 mit Anschlagmitteln 11, 12 versehen sind, welche den Verstellweg der Voreinstellschraube 10 gegenüber der Spannschraube 7 begrenzen. Des weiteren ist in dem Grundkörper 2 ein Anschlagelement in der Form eines Stifts 13 vorgesehen, welcher den Verstellweg der Spannschraube 7 nach außen begrenzt, und der Verstellweg der Spannschraube 7 nach innen hin wird durch eine Anschlagfläche 15 des Grundkörpers 2 begrenzt.

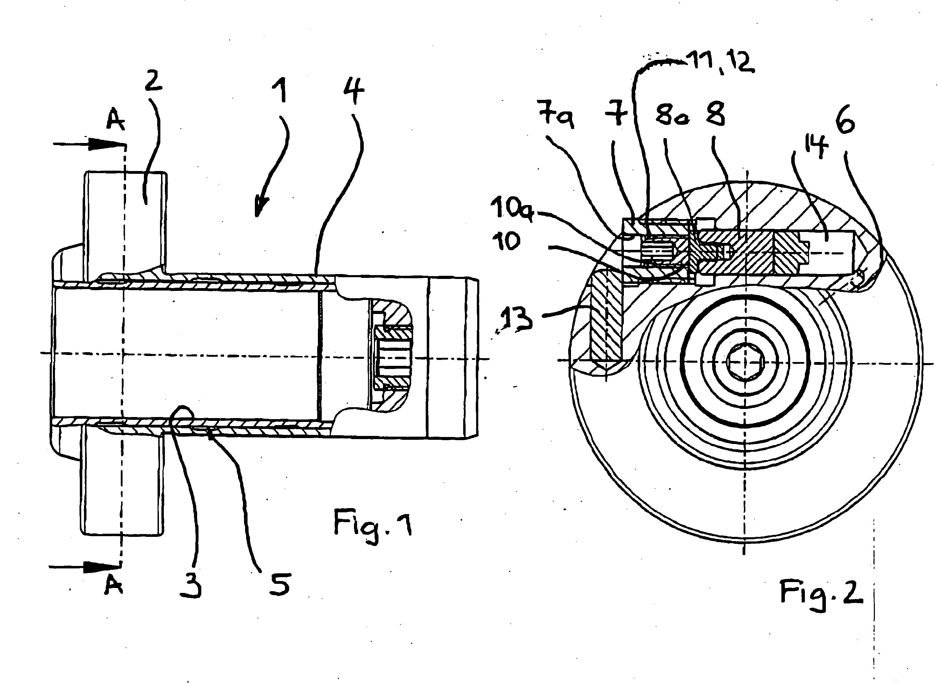

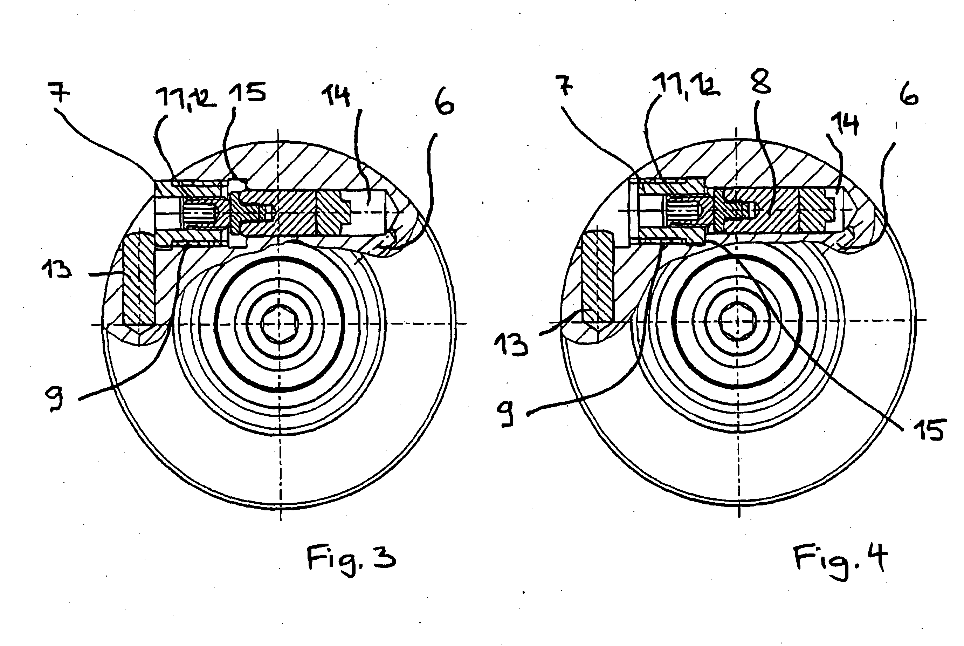

Durch die erfindungsgemäße Ausgestaltung lassen sich in dem Druckraum 5 zwei definierte Drücke einstellen. Zum Einstellen des ersten, niedriger liegenden Zwischendrucks wird die Spannschraube 7 in ihre äußere Ausgangsposition gebracht, in welcher sie an dem Stift 13 anliegt. Anschließend wird die Voreinstellschraube 10 nach innen, d.h. in den Figuren 2 bis 4 nach rechts verstellt, bis sie ihre in Figur 3 gezeigt innere Endposition erreicht, in welcher die an der Spannschraube 7 und der Voreinstellschraube 10 vorgesehenen Anschläge 11, 12 in Anlage kommen. Bei dieser Verstellung der Voreinstellschraube 10 wird auch der Kolben 8 über das Druckstück 8a in den Zylinderraum 14 gedrückt, so daß sich der Druck in dem Zylinderraum und damit in der Druckkammer 5 auf einen definierten Zwischendruck erhöht. Dieser ist bei der dargestellten Ausführungsform ausreichend, um die innere Dehnbüchse 3 so weit elastisch nach innen zu verformen, daß ein Werkzeug beispielsweise in einer Einrichtstation gespannt werden kann.

Um auch die äußere Dehnbüchse 4 zu aktivieren und die Spanneinrichtung beispielsweise in der Arbeitsspindel einer Bearbeitungsmaschine zu fixieren, wird die spannschraube 7 aus ihrer äußeren Ausgangsposition in die in Figur 4 dargestellte innere Endposition verstellt, in welcher sie an dem Anschlag 15 des Grundkörpers anliegt. Durch diese Verstellung wird auch der Kolben 8 in den Zylinderraum 14 bewegt, so daß sich der Druck in dem Zylinderraum und damit auch in der Druckkammer 5 auf den maximalen Enddruck erhöht, welcher ausreichend ist, um die äußere Dehnbüchse 4 elastisch so weit nach außen zu verformen, daß die Einspannung in der Arbeitsspindel erfolgt.

Bei der dargestellten und beschriebenen Ausführungsform sind die Wandstärken und Materialien der Dehnbüchsen 3, 4 so gewählt, daß bei dem geringeren Zwischendruck die Innenspannung über die innere Dehnbüchse 3 erfolgt und erst anschließend beim höheren Enddruck die Außenspannung über die äußere Dehnbüchse 4. Alternativ ist es möglich, die Dehnbüchsen 3, 4 so auszugestalten, daß bei dem niedrigeren Zwischendruck zunächst die Außenspannung über die äußere Dehnbüchse 4 erfolgt, und anschließend beim höheren Enddruck die Innenspannung über die innere Dehnbüchse 3.

## Patentansprüche

1. Hydraulische Spanneinrichtung mit zwei koaxial angeordneten Dehnbüchsen (3, 4), die endseitig miteinander verbunden sind und zwischen sich eine mit Hydraulikmittel gefüllte Druckkammer (5) bilden, wobei in die Druckkammer (5) ein Hydraulikmittelzuführkanal (6) mündet, der an seiner von der Druckhammer (5) fernen Seite durch eine Spannschraube (7) verschlossen ist, wobei die Spannschraube (7) mit einem im Hydraulikmittelzuführkanal (6) verschiebbar angeordneten Kolben (8) wirkverbunden ist, so daß der Kolben (8) durch Drehung der Spannschraube (7) unter Erhöhung des Drucks in der Druckkammer (5) nach innen verschiebbar ist, **dadurch gekennzeichnet, daß** die Spannschraube (7) eine zentrale, mit einem Innengewinde versehene Durchgangsbohrung (9) aufweist, in welche eine voreinstellschraube (10) eingeschraubt ist, und daß die Voreinetellechraube (10) gegenüber der Spannschraube (7) axial nach innen in eine Voreinstellposition bewegt werden kann, wobei sie sich aus der Spannschraube (7) heraus gegen den Kolben (8) bewegt und diesen unter Erhöhung des Drucks in der Druckkammer (5) nach innen drückt.

2. Hydraulische Spanneinrichtung nach Anspruch 1, **dadurch gekennzeichnet, daß** Anschlagmittel (11, 12) vorgesehen sind, die den Verstellweg der Voreinstellschraube (10) gegenüber der Spannschraube (7) begrenzen und die Voreinstellposition definieren.

3. Hydraulische Spanneinrichtung nach Anspruch 1 oder 2, **dadurch gekennzeichnet, daß** ein Anschlag (13) vorgesehen ist, welcher den Verstellweg der Spannschraube (7) nach außen begrenzt.

4. Hydraulische Spanneinrichtung nach einem der vorherigen Ansprüche, **dadurch gekennzeichnet, daß** der Verstellweg der Spannschraube (7) nach innen hin durch einen Anschlag (15) begrenzt ist.

5. Hydraulische Spanneinrichtung nach einem der vorherigen Ansprüche, **dadurch gekennzeichnet, daß** an dem Kolben (B) ein Druckstück (8a) vorgesehen ist, an welchem die Voreinstellechraube (10) in Anlage kommt.

6. Hydraulische Spanneinrichtung nach einem der vorherigen Ansprüche, **dadurch gekennzeichnet, daß** die Dehnbüchsen (3, 4) unterschiedliche Wandstärken besitzen und/oder aus unterschiedlichen Materialien bestehen derart, daß bei einer Beaufschlagung der Druckkammer (5) durch Betätigung der Voreinstellschraube (10) im wesentlichen eine der Dehnbüchsen (3) verformt wird und die andere Dehnbüchse (4) im wesentlichen durch Betätigung der Spannschraube (7) verformt wird.

## Claims

1. Hydraulic clamping device with two co-axially arranged expansion sleeves (3, 4), which are connected to each other at their ends and form there between pressure chamber (5), which is filed with hydraulic medium, wherein a hydraulic medium feeding channel (6) opens into the pressure chamber (5), which is closed at its side far from the pressure chamber (5) by a tensioning screw (7), wherein the tensioning screw (7) is operatively connected with a piston (8) slidably arranged in the hydraulic medium feeding channel (6), so that the piston (8) is displaceable inwardly by turning the tensioning screw (7) under increase of the pressure within the pressure chamber (5), **characterized in that** the tensioning screw (7) comprises a central through bore (9) provided with an internal screw thread, into which a pre-adjustment screw (10) is screwed, and that the pre-adjustment screw (10) can be axially moved inwardly into a pre-adjustment position moving out of the tensioning screw (7) against the piston (8) and pressing it under increase of a pressure in the pressure chamber (5) inwardly.

2. Hydraulic clamping device according to claim 1, **characterized in that** stopper means (11, 12) are provided, which delimit the displacement path of the pre-adjustment screw (10) relative to the tensioning screw (7) and define the pre-adjustment position.

3. Hydraulic clamping device according to claim 1 or 2, **characterized in that** a stopper (13) is provided, which delimits the displacement path of the tensioning screw (7) to the outward side.

4. Hydraulic clamping device according to any proceeding claim, **characterized in that** the splacement way of the tensioning screw (7) is limited to the inward side by a stopper (15).

5. Hydraulic clamping device according to any proceeding claim, **characterized in that** pressure piece (8a) is provided on the piston (8), on which the pre-adjustment screw (10) comes into abutment.

6. Hydraulic clamping device according to any proceeding claim, **characterized in that** the expansion sleeves (3, 4) have different wall thicknesses and/or consist of different materials in such a way, that when the pressure chamber (5) by operation of the pre-adjustment screw (10) is actuated, one of the expansion sleeves (3) is essentially deformed and the other expansion sleeve (4) is essentially deformed by actuation of the tensioning screw (7) .

## Revendications

1. Dispositif de serrage hydraulique avec deux douilles d'expansion (3, 4) en disposition coaxiale, qui sont reliées entre elles à une extrémité et qui forment entre elles une chambre de pression (5) remplie d'un liquide hydraulique, où un conduit d'admission du liquide hydraulique (6) débouche dans la chambre de pression (5), lequel est verrouillé sur son côté distant de la chambre de pression (5) par une vis de serrage (7), où la vis de serrage (7) est reliée de manière opérationnelle à des pistons (8) disposés de manière mobile dans un conduit d'admission du liquide hydraulique (6), de façon à ce que le piston (8) est mobile vers l'intérieur, par la rotation des vis de serrage (7) sous l'augmentation de la pression dans la chambre de pression, **caractérisé en ce que**, la vis de serrage (7) présente un alésage central débouchant (9) pourvu d'un filetage intérieur, dans lequel une vis de préréglage (10) est fixée, et que la vis de préréglage (10) peut être déplacée axialement vers l'intérieur dans une position de préréglage face à la vis de serrage (7), où elle se déplace de la vis de serrage (7) contre le piston (8) et pousse celle-ci vers l'intérieur sous l'augmentation de la pression dans la chambre de pression (5).

2. Dispositif de serrage hydraulique d'après revendication 1, **caractérisé en ce que** les accessoires de lignage (11, 12) sont prévus, lesquels délimitent la course de réglage des vis de préréglage (10) face à la vis de serrage (7) et définissent la position de préréglage.

3. Dispositif de serrage hydraulique d'après revendication 1 ou 2, **caractérisé en ce que**, une butée (13) est prévue, laquelle délimite la course de réglage des vis de serrage (7) vers l'extérieur.

4. Dispositif de serrage hydraulique d'après l'une des revendications précédentes, **caractérisé en ce que** la course de réglage des vis de serrage (7) est délimitée vers l'intérieur par une butée (15).

5. Dispositif de serrage hydraulique d'après l'une des revendications précédentes, **caractérisé en ce qu'**une pièce de pression (8a) est prévue sur le piston (8), sur laquelle la vis de préréglage (10) vient en annexe.

6. Dispositif de serrage hydraulique d'après l'une des revendications précédentes, **caractérisé en ce que** les douilles d'expansion (3, 4) possèdent des épaisseurs de paroi différentes et/ou se composent de matériaux variés, de façon à ce que lors d' un impact de la chambre de pression (5) en appuyant sur la vis de préréglage (10) c'est essentiellement une des douilles d'expansion (3) qui est déformée et l'autre douille d'expansion (4) est déformée essentiellement en appuyant sur la vis de réglage (7).
